# EUROPÄISCHE PATENTANMELDUNG

(11) **EP 1 520 921 A1**
(43) Veröffentlichungstag der Anmeldung: **06.04.2005**
(21) Anmeldenummer: 04023028.6
(22) Anmeldetag: 28.09.2004
(51) Int. Cl.: D04B 1/14, H05B 3/34, B60H 1/00, B62D 1/06

(54) **Beheiztes Bauteil mit einem Trägermaterial**

(30) Priorität: 01.10.2003 DE 10345901
(71) Anmelder: Gebrüder Achter GmbH & Co. KG, 41063 Mönchengladbach (DE)
(72) Erfinder: Reichel, Martina, 95163 Weissenstadt (DE)
(74) Vertreter: Bauer, Dirk, Dipl.-Ing. Dipl.-Kfm.

(57) **Zusammenfassung**

Die Erfindung betrifft ein beheiztes Bauteil (4) mit einem Trägermaterial (1), das mit einem Gestrick (2) beschichtet ist, welches Gestrick (2) wenigstens einen elektrisch zumindest teilweise leitenden Widerstandsfaden und wenigstens einen optisch, thermisch oder chemisch aktivierbaren Faden enthält, und welches Gestrick (2) durch optische, chemische oder thermische Aktivierung des Fadens mit dem Trägermaterial (1) verbunden ist. Die Erfindung betrifft ebenfalls ein Verfahren zur Herstellung eines derartigen Bauteils (4).

## Beschreibung

Die vorliegende Erfindung betrifft ein beheiztes Bauteil mit einem Trägermaterial.

In der Kraftfahrzeugbranche besteht ein Trend zu hochwertigen Innenausstattungen, bei denen die Beheizung von unterschiedlichen Komponenten, wie z. B. Spiegeln, Sitzen, Kindersitzen oder Lenkrädern obligatorisch ist.

Bei bedienerorientierten Elementen im Innenbereich, wie z.B. Sitzen und Lenkrädern ist in der Regel ein Widerstandsdraht auf ein Vlies genäht und unter einer Lederschicht aufgebracht, die auf einem Trägermaterial z.B. aus Stoff oder aus Holz oder Kunststoff gehalten sind. Verwendet wird z. B. eine Art doppelseitiges Klebeband für die Verbindung. Der Nachteil dieser Technik besteht darin, dass die Einbringung des Widerstandsfadens für jedes unterschiedliche Trägermaterial und sowohl für den Innenbereich und Außenbereich unterschiedlich konzipiert werden muss. Darüber hinaus ist die Aufbringung der Heizlage in dieser bekannten Technologie aufwändig.

Es ist daher Aufgabe der Erfindung, ein beheiztes Bauteil zu schaffen, bei welchem die Heizschicht weitgehend unabhängig von dem Material des Bauteils und dem Anwendungsbereich leicht und sicher aufbringbar ist.

Diese Aufgabe wird durch ein beheiztes Bauteil nach Anspruch 1 und ein Verfahren zur Herstellung eines beheizten Bauteils nach Anspruch 14 gelöst. Vorteilhafte Weiterbildungen der Erfindung sind Gegenstand der Unteransprüche.

Erfindungsgemäß wird auf das beheizte Bauteil ein Gestrick aufgebracht, welches wenigstens einen Widerstandsfaden und wenigstens einen aktivierbaren Faden aufweist, der durch physikalische oder chemische Effekte wie Licht, Wärme oder bestimmte Initiatoren aktivierbar ist. Der Widerstandsfaden kann zur Wärmeerzeugung als auch zur Stromzufuhr dienen. Es können jedoch auch separate Stromzufuhrdrähte vorgesehen sein. In diesem Fall können der Widerstandsfaden und der Stromzufuhrdraht unterschiedlich in dem Gestrick eingebunden sein.

Die Aufbringung des Gestricks auf das Trägermaterial geschieht durch entsprechende Aktivierung des Fadens. Durch die Aktivierung entwickelt der Faden sehr gute Adhäsionseigenschaften auf dem Trägermaterial und führt so zu einer innigen Verbindung des Gestricks mit diesem.

Vorzugsweise ist das Trägermaterial an der dem Gestrick zugewandten Seite etwas aufgeraut oder chemisch konditioniert, um den durch die Aktivierung des Fadens resultierenden Adhäsionseigenschaften des Gestricks entgegenzukommen. Denkbar sind eine Beschichtung des Trägermaterials mit einem haftvermittelnden Agens, gegebenenfalls ebenfalls ein in gleicher Weise aktivierbarer Stoff wie der aktivierbare Faden des Gestricks.

Durch diese Technik lässt sich sowohl ein heizbares gestrickbeschichtetes Lenkrad herstellen, ein beheizter Fahrzeugsitz als auch ein elektrisch beheizter Außenspiegel. Der Anwendungsbereich dieser Technik des Aufbringens eines Heizgestricks durch Aktivierung mindestens eines aktivierbaren Gestrickfadens ist somit nicht auf den Innen- und Außenbereich oder auf bestimmte Trägermaterialien beschränkt. Als Träger können somit alle Arten von Folien, Bändern als auch harten Stoffen wie Kunststoffen, Holz oder Metall bzw. deren Verbindungen oder Compounds verwendet werden. Eine Armlehne lässt sich somit in gleicher Weise mit einem thermisch oder chemisch aufgebrachten Gestrick beheizen wie eine Kopflehne oder ein Lenkrad.

Weiterhin sind Anwendungen in der Medizin als auch im Bürobereich denkbar, wo eine definierte Wärmezufuhr zu Liege- oder Sitzmöbeln oder im therapeutischen Bereich gefragt sind, z. B. für eine Pritsche, wo der Widerstandsfaden vorzugsweise silikonbeschichtet ist.

Das Gestrick kann ein herkömmliches Polymerstrick, z. B. Polyethylen oder Polyacryl sein. Der Widerstandsfaden kann als Schuss- oder Stehfaden in Art einer Webmaschenware, d. h. eines Gestricks mit Webanteilen ausgebildet sein, oder der Widerstandsdraht kann auch in Form von Maschen und Flottungen als auch in Form von Henkeln und Flottungen eingestrickt sein. Falls neben dem Widerstandsfaden ein zusätzlicher Trägerfaden verwendet wird, besteht dieser vorzugsweise aus einem Material, welches wärmebeständig ist. Ansonsten können die mitverstrickten Trägerfäden aus herkömmlichen Polymer-, Leder- oder Naturfäden oder aus Mischungen beider bestehen.

Der Widerstandsdraht kann ein herkömmlicher elektrisch leitender Draht sein, dessen Dimensionierung und spezifischer elektrischer Widerstand den Erfordernissen des Anwendungszweckes angepasst sind. Anstelle eines Widerstandsdrahtes kann auch ein mit einem Widerstandsdraht umwickelter oder mit einem elektrisch leitfähigen Material beschichteter Polymer- oder Naturfaden oder Mischfaden verwendet werden.

Es ist prinzipiell möglich, für das gesamte Gestrick einen durchgehenden Faden zu verwenden. Falls eine zonenweise Beheizung gewünscht ist, kann der Widerstandsfaden auch in Intarsiatechnik in bestimmte Zonen des Gestrickes eingestrickt sein, was insbesondere im medizinischen Bereich und für Formteile für unterschiedliche Aufgaben von Interesse sein dürfte.

Als aktivierbarer Faden können herkömmliche Schmelzfäden verwendet werden, die bei einer entsprechenden Temperaturbehandlung adhäsive Eigenschaften entwickeln, die nach der Behandlung wieder abklingen.

Als Gestrickart können alle herkömmlichen Gestricke je nach Anwendungsgebiet verwendet werden, wie z. B. Rechts-/Links-Gestrick, Rechts-/Rechts-Gestrick und Links-/Links-Gestrick.

Es ist möglich, das Gestrick in Anpassung an das Trägermaterial dreidimensional konturiert zu stricken. In diesem Fall enthält das Gestrick vorzugsweise wenigstens zwei Lagen und vorzugsweise ist die Anzahl der Maschen bzw. die Maschendichte und/oder das Material in den beiden Lagen unterschiedlich, so dass insgesamt eine dreidimensionale Struktur des fertig gestrickten Gestricks erzielt wird, welches sich dann ohne Aufbringung mechanischer Kräfte an die Kontur des Trägermaterials anschmiegt.

Dort wo ein gewisser optischer Effekt erwünscht ist, kann das Gestrick in entsprechender Weise gestrickt sein, bzw. Gestrickanteile wie z. B. Lederfäden enthalten, die einen gewünschten optischen Effekt erbringen.

Die Erfindung wird nachfolgend anhand mehrerer Ausführungsbeispiele, die in der Zeichnung dargestellt sind, näher erläutert. Es zeigt:
- Figur 1: ein zwischen zwei Teilen eines Trägermaterials angeordnetes Gestrick;
- Figur 2a: zwei mögliche Arten der Einbindung von Widerstandsfäden in ein Grundgestrick;
- Figur 2b: eine weitere Möglichkeit der Einbindung eines Widerstandsfadens;
- Figur 3: ein Gestrick mit einem Widerstandsdraht, eingebracht nach der IntarsiaTechnik und
- Figur 4: ein Formgestrick mit als Stehfäden eingebrachten Widerstandsfäden

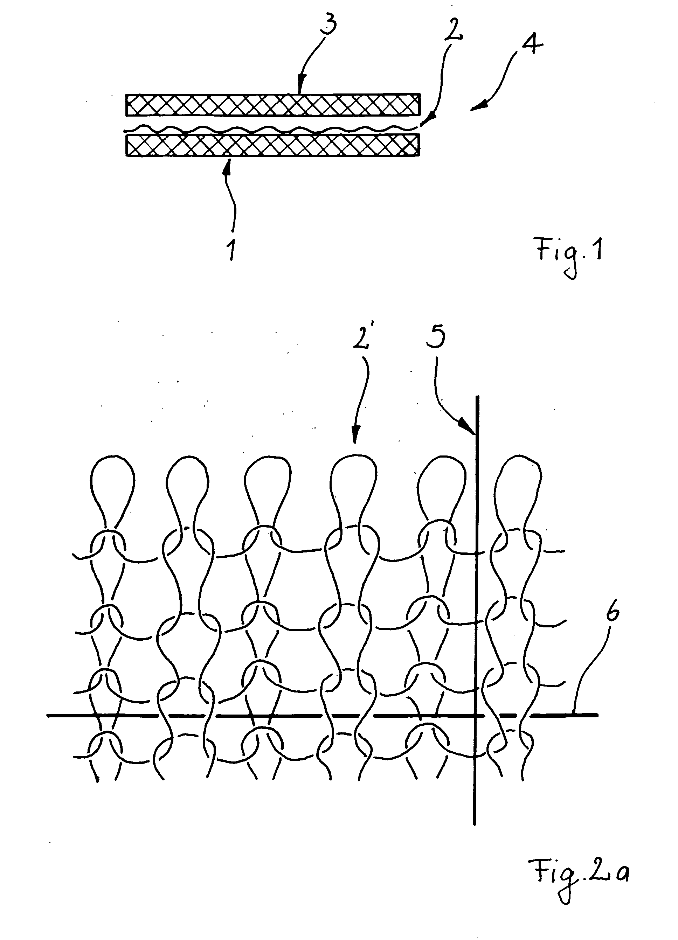

In Figur 1 ist in schematischer Weise ein unteres Teil 1 aus einem Trägermaterial, wie z.B. Holz, dargestellt, auf dessen Oberseite ein Gestrick 2 angeordnet ist, in dem sich nicht näher dargestellte Widerstandsfäden befinden. Oberhalb des unteren Teils 1 des Trägermaterials befindet sich ein oberes Teil 3 wiederum des Trägermaterials. Das Gestrick 2 enthält einen nicht näher dargestellten thermisch aktivierbaren Faden. Zur Verbindung des Gestricks 2 sowohl mit dem unteren Teil 1 als auch mit dem oberen Teil 3 des Trägermaterials wird die gesamte Anordnung aus den drei vorgenannten Komponenten einerseits zusammengepresst und andererseits erhitzt. Hierdurch entwickeln die aktivierbaren Fäden in dem Gestrick ihre Klebkraft, die dazu führt, dass die Komponenten einen innigen Verbund miteinander eingehen und so ein zusammenhängendes Bauteil 4, beispielsweise ein Lenkrad, bilden.

Figur 2a zeigt ein Gestrick 2', das als Rechts-Rechts-Gestrick ausgeführt ist. Hierin ist als Stehfaden ein Widerstandsfaden 5 und/oder als Schussfaden ein Widerstandsfaden 6 eingearbeitet. Um nicht isolierte Widerstandsfäden 5, 6 verwenden zu können und dennoch einen Kurzschluss zwischen den einzelnen Stromkreisen der Widerstandsfäden 5, 6 zu vermeiden, ist es in der Regel sinnvoll, die Widerstandsfäden 5, 6 entweder als Stehfäden oder als Schussfäden einzuarbeiten.

Figur 2b zeigt ein Gestrick 2'''', bei dem ein Widerstandsfaden 10 abwechselnd vermascht ist und flottiert.

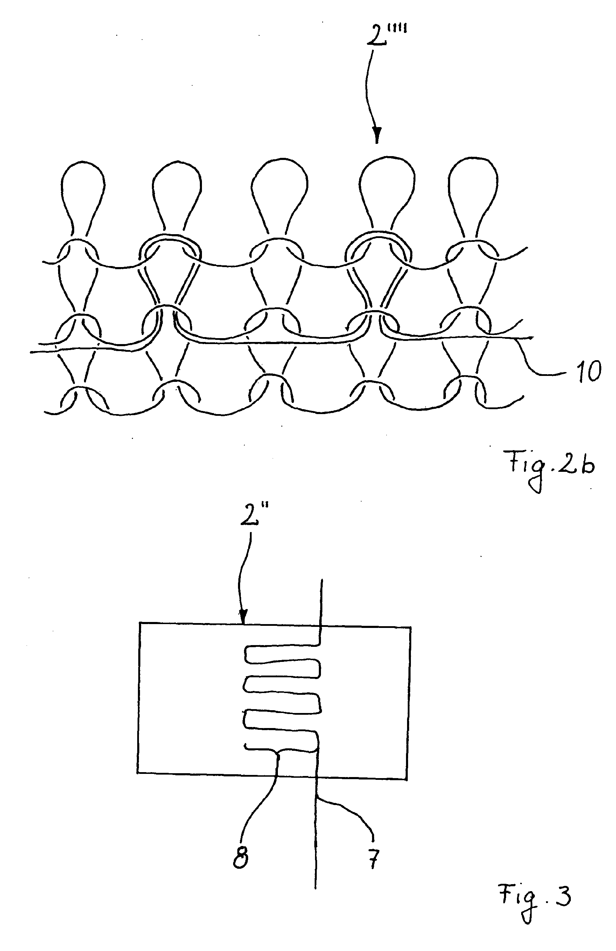

Als Alternative zu der vorgenannten Einbindungstechnik ist es gleichfalls möglich, einen Widerstandsfaden 7 nach der an sich bekannten Intarsiatechnik in ein Grundgestrick 2" einzubringen, wie dies in Figur 3 gezeigt ist. Bei dem Gestrick 2" handelt es somit um ein Intarsia-Gestrick, bei dem der Widerstandsdraht so platziert ist, dass definierte Bereiche in dem Gestrick 2" beheizbar sind.

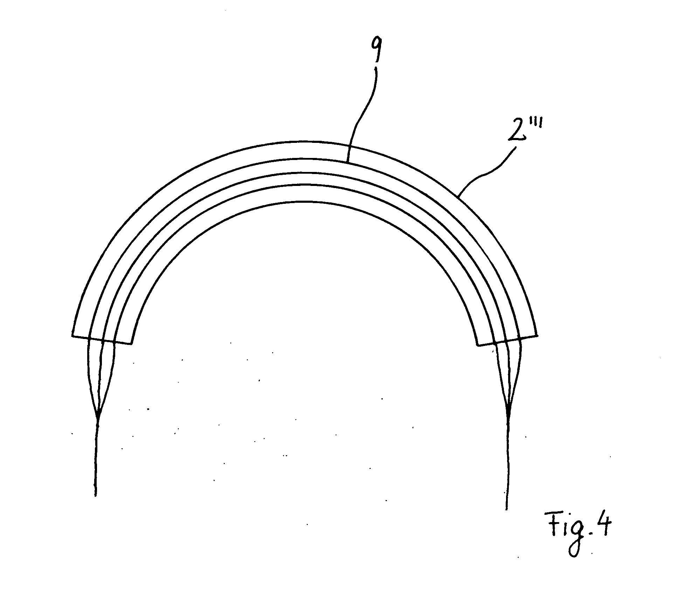

In Figur 4 ist schließlich noch ein weiteres Gestrick 2''' dargestellt, bei dem es sich um ein Formgestrick handelt, das kreisbogenförmig Gestalt besitzt. Das Formgestrick enthält Widerstandsfäden 9, die als Stehfäden in das Gestrick eingearbeitet sind. Das Gestrick 2''' dient insbesondere dazu, um mit einem Trägermaterial in Form eines Lenkrades verbunden zu werden. Zwei Gestricke 2''' sind erforderlich, um ein in der Regel kreisförmiges Lenkrad an dessen Außenseite zu ummanteln.

Sämtliche Gestricke 2, 2', 2'', 2''', 2'''' enthalten die erfindungsgemäß vorgesehenen optisch, thermisch oder chemisch aktivierbaren Fäden, um auf einfache Weise eine sehr haltbare Verbindung mit dem Trägermaterial herbeiführen zu können.

## Patentansprüche

1. Beheizbares Bauteil (4) mit einem Trägermaterial, das mit einem Gestrick (2, 2', 2", 2"', 2'''') beschichtet ist, welches Gestrick wenigstens einen elektrisch zumindest teilweise leitenden Widerstandsfaden (5, 6, 7, 9, 10) und wenigstens einen optisch, thermisch oder chemisch aktivierbaren Faden enthält, welches Gestrick (2, 2', 2", 2''', 2'''') durch optische, chemische oder thermische Aktivierung des aktivierbaren Fadens mit dem Trägermaterial verbunden ist.

2. Bauteil nach Anspruch 1, **dadurch gekennzeichnet, dass** das Bauteil (4) ein Lenkrad ist.

3. Bauteil nach einem der vorhergehenden Ansprüche, **dadurch gekennzeichnet, dass** das Gestrick (2, 2', 2'', 2''', 2'''') wenigstens einen Lederfaden enthält.

4. Bauteil nach einem der vorhergehenden Ansprüche, **dadurch gekennzeichnet, dass** der Widerstandsfaden (5, 6, 7, 9, 10) Polymer- oder Naturfaden enthält.

5. Bauteil nach einem der vorhergehenden Ansprüche, **dadurch gekennzeichnet, dass** der Widerstandsfaden (10) in dem Gestrick (2'''') vermascht und auf Flotte gelegt ist.

6. Bauteil nach einem der vorhergehenden Ansprüche, **dadurch gekennzeichnet, dass** der Widerstandsfaden in Henkel und Flottung verstrickt ist.

7. Bauteil nach einem der vorhergehenden Ansprüche, **dadurch gekennzeichnet, dass** der Widerstandsfaden (5, 6, 7, 9, 10) durch einen elektrisch zumindest teilweise leitfähigen Draht oder durch einen drahtumwickelten Faden gebildet ist.

8. Bauteil nach einem der vorhergehenden Ansprüche, **dadurch gekennzeichnet, dass** der Widerstandsfaden (5, 6, 7, 9, 10) mit Silikon beschichtet ist.

9. Bauteil nach einem der vorhergehenden Ansprüche, **dadurch gekennzeichnet, dass** der Widerstandsfaden (5, 6) im Gestrick als Schuss- oder Stehfaden geführt ist.

10. Bauteil nach einem der vorhergehenden Ansprüche, **dadurch gekennzeichnet, dass** der aktivierbare Faden ein Klebefaden ist.

11. Bauteil nach einem der vorhergehenden Ansprüche, **dadurch gekennzeichnet, dass** das Gestrick (2, 2', 2", 2"', 2'''') mehrlagig und dreidimensional geformt bzw. konturiert ist.

12. Bauteil nach Anspruch 11, **dadurch gekennzeichnet, dass** die Anzahl und/oder Dichte und/oder das Material des Gestricks (2, 2', 2'', 2''', 2'''') in den beiden Lagen unterschiedlich ist.

13. Bauteil nach einem der vorhergehenden Ansprüche, **dadurch gekennzeichnet, dass** das Trägermaterial aus Holz, Metall oder Kunststoff, Hartschaum oder einem Compound dieser Materialien besteht.

14. Verfahren zur Herstellung eines beheizbaren Bauteils (4) mit einem Trägermaterial, einem Gestrick (2, 2', 2", 2''', 2"") umfassend wenigstens einen Widerstandsfaden (5, 6, 7, 8, 10) und wenigstens einen thermisch oder chemisch aktivierbaren Faden, welches Gestrick (2, 2', 2", 2"', 2'''') durch chemische oder thermische Aktivierung des aktivierbaren Fadens mit dem Trägermaterial verbunden wird.
